Europäisches Patentamt

European Patent Office

Office européen des brevets

(11) Publication number: **0 338 691**
**A2**

# EUROPEAN PATENT APPLICATION

(21) Application number: **89303225.0**

(22) Date of filing: **31.03.89**

(51) Int. Cl.⁴: **A01K 5/02**

(30) Priority: **19.04.88 GB 8809181**

(43) Date of publication of application:
**25.10.89 Bulletin 89/43**

(84) Designated Contracting States:
**AT BE DE ES FR GR IT NL SE**

(71) Applicant: **SANDHOLME ENGINEERING
LIMITED
Riverside Industrial Park
Caterall Preston PR3 0HP(GB)**

(72) Inventor: **Collinson, Ernest Roger
2 Hallows Close
St. Michaels Preston, PR3 0UQ(GB)**

(74) Representative: **Lyons, Andrew John et al
ROYSTONS 531 Tower Building Water Street
Liverpool L3 1BA(GB)**

(54) Livestock feeding stations.

(57) A livestock feeding station comprises a feed store (22), a feed trough (20) accessible to an animal, a paddle-wheel (40) to be rotated by the animal which in turn causes rotation of an auger (36) which transfers feed from the store to the trough.

FIG.1

# Livestock feeding Stations

This invention relates to livestock feeding stations, particular, such stations whereby feed allocation can be controlled and monitored.

In order to obtain optimum livestock development it is desirable to control and monitor feed intake.

An object of this invention is to provide a livestock feeding station whereby feed allocation may be controlled and monitored.

According to the invention there is provided a livestock feeding station comprising a feed store, a feed trough accessible to an animal and means for transferring feed from the store to the trough responsive to action of the animal.

In a preferred embodiment action of an animal may be on a rotatable part that, preferably via gearing, rotates an auger or the like that moves feed from the store to a chute or tube and into the trough.

The rotatable part may be a paddle-wheel positioned in front of the chute or tube, preferably transverse to the direction of feed movement so as to encourage an animal to act on the paddles to rotate same.

Preferably the livestock feed station of the invention also includes means for preventing bridging of animal feed above the auger. Such means may comprise one or more feed agitators which may be linked to rotation of the auger. The feed agitators may be one or more rods arranged to move reciprocally in the feed above the auger in order to disturb the feed and prevent clogging.

In addition to feed supply it is also desirable to provide a variable rate water pump operable via the paddle-wheel, whereby water can be supplied to the trough.

To control the feed/water allocation an adjustable brake means, say a friction brake, may be provided on the paddle-wheel shaft. Thus, although an animal is free to feed or drink, the effort required to rotate the paddle-wheel can be increased so that feed/water usage is restricted.

Additionally, or alternatively the amount of feed or water consumed by a particular animal may be counted and recorded, say using a counter connected to a computer, according to the turns of the auger. Further access to feed/water may be stopped at a desired level preferably by computer activated solenoid lock means that locks the paddle-wheel or auger against further rotation.

In addition, it is preferred to have associated with the feeding station of the invention animal recognition means, preferably electronic, such as means for sensing and recognising a coded tag or collar on the animal. Then, feed/water allocation for a recognised animal can be controlled via the computer which is suitably programmed therefor.

The livestock feeding station of the invention preferably has, formed as a single unit, a platform on which an animal stands, at least with its front feet, in front of a trough into which feed falls via a chute or tube from the feed store situated behind and above the trough. The feed store is preferably open topped to permit ready addition of feed such as via a piped system from a central feed store.

The invention will now be further described, by way of example only, with reference to the accompanying drawings, in which:-

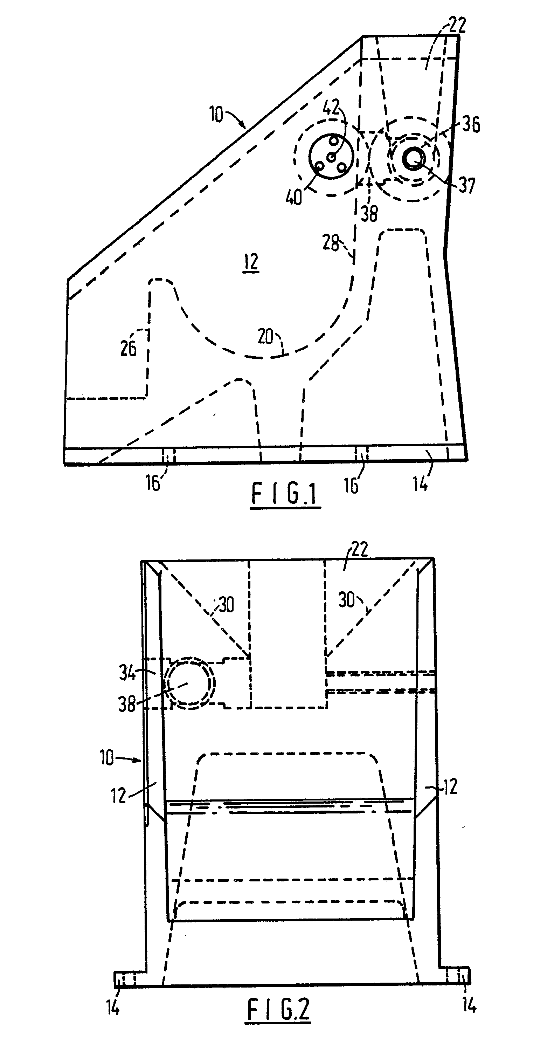

Figure 1 is a side elevation of a livestock feeding station;

Figure 2 is a front elevation of the livestock feeding station of Figure 1;

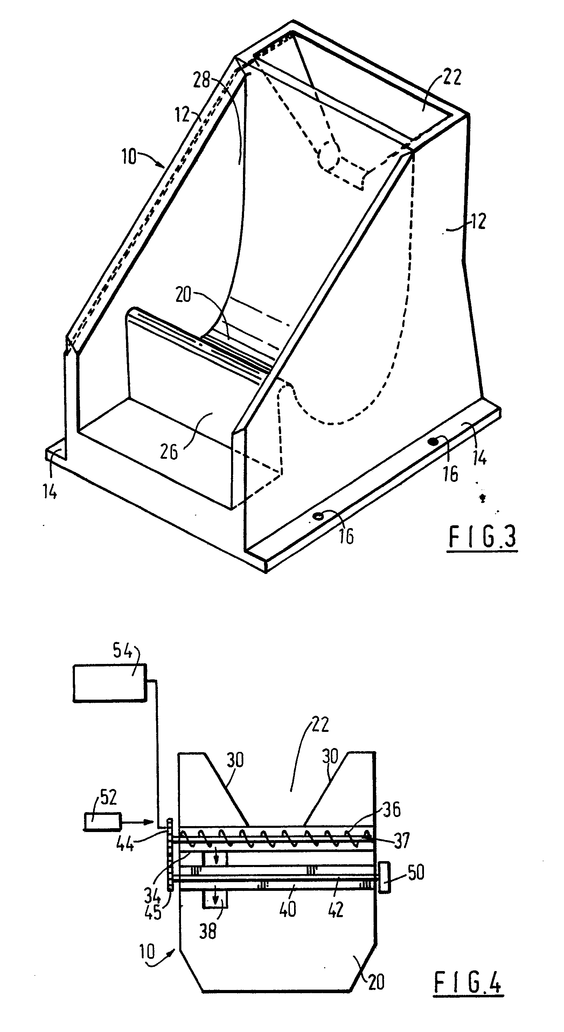

Figure 3 is a perspective view of the livestock feeding station of Figure 1; and

Figure 4 shows schematically further detail of the livestock feeding station of Figure 1.

Referring to the accompanying drawings, a livestock feeding station 10 comprises a basic unit that may be affixed to a floor. The unit has sides 12 with sloping top edges which are also chamfered inwardly. The lower edges of the sides are flanged at 14 through which are bolt or screw holes 16 for use in securing the station to a floor.

Between the sides 12 are firstly a step 18, a feed trough 20 and a feed store 22 in the form of a hopper. The trough 20 has a low front wall 26 a higher back wall 28 behind which is the feed store 22.

The feed store 22 is open-topped and has convergent sides 30 leading to a horizontal passageway 34 in which is situated an auger 36 on a shaft 37 extending beyond a side wall 12. Linking the passageway 34 and the trough 20 is a tube 38 offset relative to the base of the feed store.

Parallel to the auger 36 and in front of the back wall 28 is a paddle-wheel 40 on a shaft 42 extending beyond the side walls 12 at each end. The outer ends of the shafts 37 and 42 carry gearwheels 44,45 respectively with a 5:1 gear reduction from the paddle-wheel gearwheel 45 to the auger gearwheel 44.

The other end of the shaft 42 carries an adjustable friction brake 50. The auger is lockable by means of a solenoid operated lock 52. A counter 54 is provided to record rotation of the gearwheel 44. The counter 54 is coupled to a computer for central monitoring as is the solenoid lock.

In operation, an animal steps upto the feed station and rotates the paddle-wheel using its nose.

As the paddle-wheel rotates it causes the auger to rotate and so move feed from the hopper along the passageway 34 to the tube 38 and thence into the feed trough. Thus, feed may be obtained by an animal on demand.

However, feed supply may be restricted by means of the adjustable friction brake, whereby more effort may be required to turn the paddle-wheel so that the rate of feed supply is decreased.

As the auger rotates its gear wheel rotations are counted and recorded by a computer. The computer is programmed to activate the solenoid lock when a predetermined amount of feed has been supplied to the feed station, thereby preventing further supply of feed for the time being. By incorporating an electronic animal recognition system, such as operates in response to a coded tag or collar on the animal, and by programming the computer to record feed supply separately for each animal, then feed supply for each animal can be readily monitored and controlled.

## Claims

1. A livestock feed station comprising a feed store, a feed trough accessible to an animal and means for transferring feed from the store to the trough in repsonse to action of the animal.

2. A livestock feed station as claimed in claim 1, wherein action of the animal is on a rotatable part that causes rotation of an auger or the like that moves feed from the store to the trough.

3. A livestock feed station as claimed in claim 2 including gearing between the rotatable part and the auger.

4. A livestock feed station as claimed in claim 2 or 3, wherein the rotatable part is a paddle-wheel.

5. A livestock feed station as claimed in claim 4, wherein the paddle-wheel is transverse to the direction of movement of the feed.

6. A livestock feed station as claimed in any one of claims 1 to 5 including means for agitating feed in the store as the auger rotates.

7. A livestock feed station as claimed in any one of claims 1 to 6, further comprising adjustable brake means to control rate of rotation of the rotatable part by an animal.

8. A livestock feed station as claimed in any one of claims 1 to 7 including means for recording feed intake of an animal.

9. A livestock feed station as claimed in claim 8 including means for locking the rotatable part against rotation at a predetermined level of feed intake.

10. A livestock feed station as claimed in claim 8 or 9 having animal recognition means that interacts with feed intake recordal.

F I G.1

F I G.2

F I G. 3

F I G. 4